# EUROPÄISCHE PATENTANMELDUNG

(11) **EP 0 893 645 A2**
(43) Veröffentlichungstag der Anmeldung: **27.01.1999**
(21) Anmeldenummer: 98890066.8
(22) Anmeldetag: 10.03.1998
(51) Int. Cl.: F16L 47/06

(54) **T-förmiger Rohrleitungsteil**

(30) Priorität: 25.07.1997 AT 1272/97
(71) Anmelder: Harreither Gesellschaft m.b.H, 3334 Gaflenz (AT)
(72) Erfinder: Harreither, Raimund, 3334 Gaflenz (AT)
(74) Vertreter: Kopecky, Helmut, Dipl.-Ing. Kopecky & Schwarz Patentanwälte

(57) **Zusammenfassung**

Um einen einfachen nachträglichen Anschluß einer weiteren Rohrleitung od. dgl. am nicht durchgehenden Teil (2) eines T-förmigen Rohrleitungsteiles (1) zu ermöglichen, ist die Rohrwandung an der der Mündung (9') des nicht durchgehenden Teiles (2) des Rohrleitungsteiles (1) gegenüberliegenden Seite als ebene Platte (12) ausgebildet (Fig. 1).

## Beschreibung

Die Erfindung betrifft einen T-förmigen Rohrleitungsteil, vorzugsweise aus Kunststoff gebildet.

Solche T-förmigen Rohrleitungsteile werden u. a. als Abschluß einer Rohrleitung vorgesehen und ermöglichen am Ende der Rohrleitung eine Verteilung der Flüssigkeit in zwei seitwärts gerichtete Seitenabgänge. An diese können entweder weitere Rohrleitungen, oder Entlüftungsventile, oder Füll- oder Entleerhähne etc. angeschlossen werden.

Es hat sich gezeigt, insbesondere bei Heizungsinstallationen, daß manchmal eine Verlängerung der Rohrleitung, die von einem solchen T-förmigen Rohrleitungsteil abgeschlossen ist, gewünscht wird, beispielsweise um weitere die Heizflüssigkeit verteilende Module anzuschließen. Hierbei war es bisher notwendig, den als Endabschluß vorgesehenen T-förmigen Rohrleitungsteil abzutrennen und nach Anschluß der Heizungsmodule durch einen neuen zu ersetzen. Zudem sind die damit verbundenen Arbeiten zeitaufwendig und arbeitsintensiv.

Die Erfindung bezweckt die Vermeidung dieser Nachteile und Schwierigkeiten und stellt sich die Aufgabe, einen T-förmigen Rohrleitungsteil zu schaffen, der auch bei einer Verlängerung der Rohrleitung, an der der T-förmige Rohrleitungsteil angeschlossen ist, weiterverwendet werden kann. Zudem soll die Verlängerung der Rohrleitung in einfacher Weise bewerkstelligt werden können.

Diese Aufgabe wird erfindungsgemäß dadurch gelöst, daß die Rohrwandung an der der Mündung des nicht durchgehenden Teiles des Rohrleitungsteiles gegenüberliegenden Seite als ebene Platte ausgebildet ist. Will man die Rohrleitung, an der der T-förmige Rohrleitungsteil angeschlossen ist, verlängern, ist es lediglich notwendig, die ebene Platte herauszuschneiden oder auszubohren, worauf an diese Öffnung eine weitere Rohrleitung oder weitere Module etc. angeschlossen werden können. Wesentlich ist, daß die Wandung des T-förmigen Rohrleitungsteils an der Stelle, die der Mündung des nicht durchgehenden Teiles des Rohrleitungsteils gegenüberliegt, eben ausgebildet ist, da nur dann zuverlässig eine wirklich dichte und genau passende Verbindung zum Anschluß einer weiteren Rohrleitung od. dgl. geschaffen werden kann. Bisher verwendete T-Stücke waren an dieser Stelle gewölbt ausgebildet.

Vorzugsweise weist diese ebene Platte einen Durchmesser auf, der gleich bemessen ist wie der Innendurchmesser des nicht durchgehenden Teiles des Rohrleitungsteiles.

Um einen einfachen Anschluß einer weiteren Rohrleitung od. dgl. bewerkstelligen zu können, ist zweckmäßig am Rohrleitungsteil außenseitig ein die ebene Platte peripher umgebender Ansatz, vorzugsweise ein Schweißansatz, zum Anschluß einer weiteren Rohrleitung od. dgl. vorgesehen.

Der T-förmige Rohrleitungsteil ist vorzugsweise aus Polypropylen gefertigt. Hierdurch ist ein Modul durch eine einfach durchzuführende Schweißverbindung an den T-förmigen Rohrleitungsteil anschließbar.

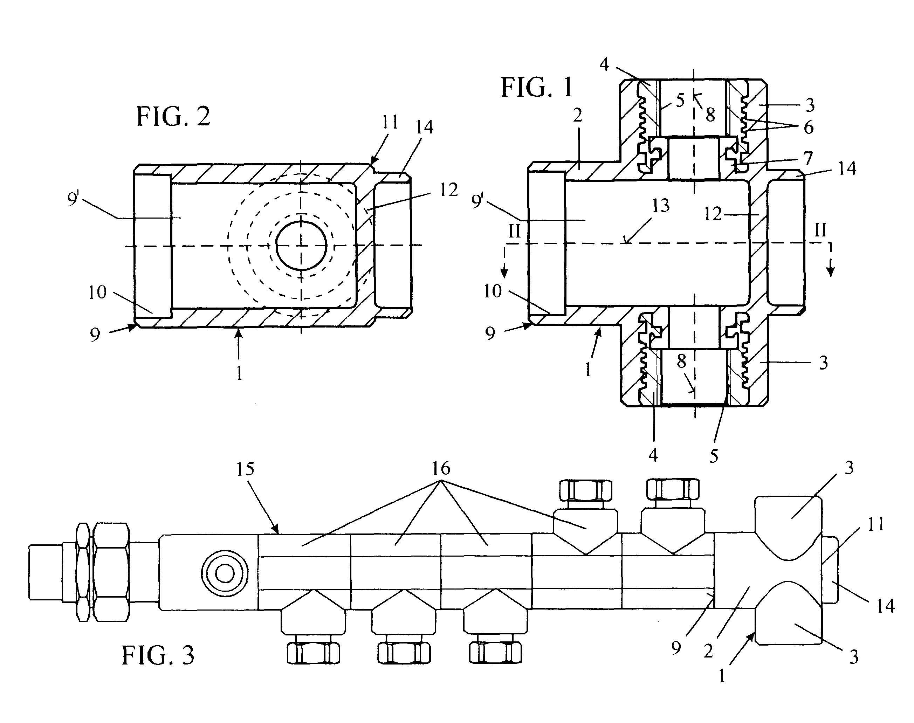

Die Erfindung ist nachstehend anhand eines Ausführungsbeispieles näher erläutert, wobei Fig. 1 einen Längsschnitt durch einen erfindungsgemäßen T-förmigen Rohrleitungsteil und Fig. 2 einen Schnitt quer hierzu gemäß der Linie II-II der Fig. 1 zeigen. Fig. 3 zeigt die Anwendung eines erfindungsgemäßen Rohrleitungsteils in einem Heizkreisverteiler.

Der T-förmige Rohrleitungsteil 1, der vorzugsweise aus Kunststoff, insbesondere aus Polypropylen gefertigt ist, ist von einem Hauptrohrteil 2 und zwei von diesem seitlich auskragenden Nebenrohrteilen 3 gebildet, wobei der Hauptrohrteil 2 einen größeren Durchmesser aufweist als die Nebenrohrteile 3. In die Nebenrohrteile 3 sind metallische Anschlußstücke 4 eingegossen, die jeweils mit einem Innengewinde 5 zum Anschluß weiterer Rohrleitungen oder Ventile etc. versehen sind. Diese Anschlußstücke 4 sind mit Nuten 6, die sich in Umfangsrichtung, und mit weiteren Nuten 7, die sich in Querrichtung zu den Mittelachsen 8 der Anschlußstücke 4 erstrecken, versehen, so daß ein guter Sitz der Anschlußstücke 4 im T-förmigen Rohrleitungsteil 1 gewährleistet ist, der auch mechanischen Beanspruchungen und Schrumpfungen bzw. Wärmedehnungen standhält.

Der Hauptrohrteil 2 ist an seinem an eine Rohrleitung od. dgl. anschließbaren Ende 9 mit einer innenseitig umlaufenden Umfangsausnehmung 10 versehen, die zur Herstellung einer Schweißverbindung mit der Rohrleitung od. dgl., an den der T-förmige Rohrleitungsteil 1 angeschlossen werden soll, dient. Am gegenüberliegenden Ende 11 des Hauptrohrteils 2, d.h. an jenem Ende, das der Mündung 9' des nicht durchgehenden Teiles des Rohrleitungsteiles 1 gegenüberliegt, ist die Rohrwandung als ebene Platte 12 ausgebildet. Diese kann zum Anschluß des T-förmigen Rohrleitungsteiles 1 an eine weitere Rohrleitung ausgebohrt oder ausgeschnitten werden. Die ebene Platte ist außenseitig peripher von einem sich in Richtung der Mittelachse 13 des Rohrleitungsteiles 1 erstreckenden Ansatz 14 umgeben, der den Anschluß einer weiteren Rohrleitung od. dgl. erleichtern soll. Dieser Ansatz 14 kann dazu dienen, ein Anschweißen einer weiteren Rohrleitung od. dgl. zu ermöglichen.

Bei dem in der Zeichnung dargestellten T-förmigen Rohrleitungsteil 1 handelt es sich um einen Endmodul für einen Heizkreisverteiler 15, der in Fig. 3 dargestellt ist. Dieser Heizkreisverteiler 15 ist aus Modulen 16 zusammengesetzt, wobei sämtliche Module durch Schweißverbindungen (Polyfusionsschweißverbindungen) miteinander verbunden sind. An den den Endmodul bildenden T-förmigen Rohrleitungsteil 1, d.h. dessen Nebenrohrteilen 3, sind beispielsweise Entlüftungshähne bzw. Füll- oder Entleerhähne anschließbar.

Soll beispielsweise der Heizkreisverteiler 15 noch nachträglich mit weiteren Modulen 16, beispielsweise zum Anschluß weiterer Heizkreise, versehen werden, muß lediglich die ebene Platte 12 des Rohrleitungsteiles 1 aufgebohrt bzw. aufgeschnitten werden, und es können durch Polyfusionsschweißung weitere Module 16 mit dem Heizkreisverteiler 15 verbunden werden.

Die Erfindung beschränkt sich nicht auf das dargestellte Ausführungsbeispiel, sondern sie kann in verschiedener Art modifiziert werden. Beispielsweise ist auch die Anwendung des T-förmigen Rohrleitungsteils 1 für Trinkwasserleitungen bzw. -verteiler etc. möglich.

## Patentansprüche

1. T-förmiger Rohrleitungsteil (1), vorzugsweise aus Kunststoff gebildet, dadurch gekennzeichnet, daß die Rohrwandung an der der Mündung (9') des nicht durchgehenden Teiles (2) des Rohrleitungsteiles (1) gegenüberliegenden Seite als ebene Platte (12) ausgebildet ist.

2. Rohrleitungsteil (1) nach Anspruch 1, dadurch gekennzeichnet, daß diese ebene Platte (12) einen Durchmesser aufweist, der gleich bemessen ist wie der Innendurchmesser des nicht durchgehenden Teiles (2) des Rohrleitungsteiles (1).

3. Rohrleitungsteil (1) nach einem der Ansprüche 1 oder 2, dadurch gekennzeichnet, daß am Rohrleitungsteil (1) außenseitig ein die ebene Platte (12) peripher umgebender Ansatz (14), vorzugsweise ein Schweißansatz, zum Anschluß einer weiteren Rohrleitung od. dgl. vorgesehen ist.
